# EUROPÄISCHE PATENTANMELDUNG

(11) **EP 4 497 959 A1**
(43) Veröffentlichungstag der Anmeldung: **29.01.2025**
(21) Anmeldenummer: 23188042.8
(22) Anmeldetag: 27.07.2023
(51) Int. Cl.: F16C 25/06, F16C 33/66, F16C 35/063, F16C 43/04

(54) **LAGERANORDNUNG, INSBESONDERE FÜR WINDKRAFTANLAGEN**

(71) Anmelder: Flender GmbH, 46395 Bocholt (DE)
(72) Erfinder: THELING, Julian, 46395 Bocholt (DE); KÖNIG, Christian, 46395 Bocholt (DE); VENNEMANN, Michael, 46395 Bocholt (DE)
(74) Vertreter: Michalski Hüttermann & Partner Patentanwälte mbB

(57) **Zusammenfassung**

Lageranordnung 10, umfassend ein Wellenelement 12, ein Gehäuseelement 14, ein erstes Wälzlager 20 mit einem Innenring 22 und einem Außenring 24, ein zweites Wälzlager 30 mit einem Innenring 32 und einem Außenring 34, wobei die beiden Wälzlager 20, 30 eine O-Anordnung bildend zueinander angeordnet sind und das Wellenelement 12 gegenüber dem Gehäuseelement 14 drehbar um eine Drehachse A_{D} lagern, ein zwischen den Außenringen 24, 34 der Wälzlager 20, 30 einsitzende Distanzstruktur 40 und eine auf dem Wellenelement 12 und mittelbar gegen den Innenring 22, 32 eines der beiden Wälzlager 20, 30 zur Erzeugung eines Lagerspiels und/oder einer Lagervorspannung schraubbare Nutmutter 42. Zwischen der Nutmutter 42 und dem Innenring 22, 32 ist ein Distanzelement 44 vorgesehen. Die Nutmutter 42 legt das Distanzelement 44 in einer axialen Position gegenüber dem Wellenelement 12 formschlüssig fest.

## Beschreibung

Die Erfindung betrifft eine Lageranordnung, umfassend ein Wellenelement, ein Gehäuseelement, ein erstes Wälzlager mit einem Innenring und einem Außenring, ein zweites Wälzlager mit einem Innenring und einem Außenring, wobei die beiden Wälzlager eine angestellte Lagerung bildend zueinander angeordnet sind und das Wellenelement gegenüber dem Gehäuseelement drehbar um eine Drehachse A_{D} lagern, eine zwischen den Außenringen der Wälzlager einsitzende Distanzstruktur und eine auf dem Wellenelement und mittelbar gegen den Innenring eines der beiden Wälzlager zur Erzeugung eines Lagerspiels und/oder einer Lagervorspannung schraubbare Nutmutter.

Eine Lageranordnung ist in der EP 3 650 689 A1 gezeigt. Lageranordnungen werden im Getriebebau eingesetzt und werden insbesondere im Bereich von Antriebssträngen von Windkraftanlagen steigenden Anforderung ausgesetzt. Dies betrifft sowohl die Belastungen während des Betriebs als auch das Erfordernis bzgl. der Montage und der Einstellung, nämlich diese schnell und präzise zu bewerkstelligen. Es existieren indirekte Einstellungsverfahren für Lageranordnungen, die allerdings mit hohen Unsicherheiten einhergehen. Darüber hinaus sind axiale Vorspannungen von Lageranordnungen nicht in Form von geometrischen Maßen unmittelbar messbar. Es ist üblich eine zu erzielende Vorspannung vorzugeben und davon ausgehend die axiale Breite der Distanzelemente zwischen den Lagerringen zu berechnen, die Distanzringe wie berechnet zu fertigen und anschließend die Lager einschließlich der Distanzelemente zu montieren. Hierbei kann nicht immer gewährleistet werden, dass die vorgegebene Vorspannung erzielt wird.

Die Einstellung der Lagervorspannung wird mit Hilfe von einem Distanzelement zwischen den Innenringen und einem zweigeteilten Distanzelement zwischen den Außenringen der Lager gelöst. Die Innenringe werden durch axiales Klemmen mittels des Distanzelements gegen Verdrehen gesichert. Die axiale Klemmkraft wird über eine Nutmutter aufgebracht, die auf die Hohlwelle aufgeschraubt ist. Das äußere Distanzelement wird über eine radial eingesetzte Verdrehsicherung gegen das Hohlwellengehäuse gesichert und die Lageraußenringe werden über eine Passfeder gegen das äußere Distanzelement gesichert.

Die Einstellung des Lagerspiels bzw. der Lagervorspannung erfolgt über das Anpassen des äußeren Distanzelements. Das Maß des inneren Distanzelements kann vorab durch Messung der Einzelkomponenten ermittelt werden. Die Einstellung der Lagervorspannung erfolgt über das Anpassen der axialen Breite des inneren Distanzelements im Verhältnis zur axialen Breite des äußeren Distanzelements. Zunächst erfolgt eine Vormontage der Lageranordnung mit einem vorläufigen äußeren Distanzelement, wobei hierbei ein messbares Lagerspiel entsteht. Nach der Vermessung des Lagerspiels ist eine mechanische Anpassung des äußeren Distanzelements notwendig. Hierzu ist die vormontierte Baugruppe wieder zu demontieren. Aufgrund der benötigten Erwärmung der Lager zum Fügen auf der Hohlwelle und der Temperaturabhängigkeit des sich einstellenden Spiels ist dabei ein zeitaufwendiger Abkühlvorgang zwischen Montage und Vermessung notwendig, um die Temperaturgleichheit der Komponenten sicherzustellen.

Es besteht deshalb ein ständiges Bedürfnis an einer leistungsfähigen Lageranordnung, die präzise einstellbar, schnell montierbar und kosteneffizient in der Herstellung ist. Der Erfindung liegt die Aufgabe zugrunde, eine technische Möglichkeit bereitzustellen, die in zumindest einem der genannten Aspekte eine Verbesserung bietet.

Die Lösung der Aufgabe erfolgt durch eine Lageranordnung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Lageranordnung, umfassend ein Wellenelement, ein Gehäuseelement, ein erstes Wälzlager mit einem Innenring und einem Außenring, ein zweites Wälzlager mit einem Innenring und einem Außenring, wobei die beiden Wälzlager eine angestellte Lagerung bildend zueinander angeordnet sind und das Wellenelement gegenüber dem Gehäuseelement drehbar um eine Drehachse A_{D} lagern, ein zwischen den Außenringen der Wälzlager einsitzende Distanzstruktur und eine auf dem Wellenelement und mittelbar gegen den Innenring eines der beiden Wälzlager zur Erzeugung eines Lagerspiels und/oder einer Lagervorspannung schraubbare Nutmutter, wobei zwischen der Nutmutter und dem Innenring ein Distanzelement vorgesehen ist, wobei das Wellenelement und das Distanzelement jeweils gegensätzlich zueinander ausgebildete Anlageschultern ausbilden und die Nutmutter das Distanzelement in einer axialen Position gegenüber dem Wellenelement formschlüssig festlegt.

Die Drehachse A_{D} legt vorliegend die Axialrichtung fest, so dass sich aus dieser Axialrichtung die jeweiligen Radialrichtungen ergeben. Das Wellenelement kann je nach zugrundliegender Konfiguration als Hohlwelle ausgeführt sein. Das Wellenelement kann in dieser Konfiguration über eine Steckverzahnung mit einer im Drehmomentfluss vorgelagerten Sonnenwelle einer Planetenstufe formschlüssig verbunden sein. Das hohl ausgeführte Wellenelement kann zentrisch ein Pitchrohr in sich aufnehmen, durch das elektrische und/oder hydraulische Leitungen hindurchgeführt sind.

Bei dem Gehäuseelement kann es sich um einen Flanschabschnitt des gesamten Getriebegehäuses handeln, wobei dieser Flanschabschnitt gegen das hauptsächliche Getriebegehäuseteil gesetzt ist und auf der anderen Seite mit einem Deckelelement verschlossen ist. In dem Deckelelement können die Durchführung für eine oder mehrere Getriebewellen vorgesehen sein.

Die in einer O-Anordnung zueinander angeordneten beiden Wälzlager können als Pendelrollenlager, als Kegelrollenlager, als Schrägkugellager, oder als Axial-Pendelrollenlager ausgebildet sein. Derartige Wälzlager erlauben es in vorteilhafter Weise, eine Axialbeanspruchung auf den Außenring oder Innenring als Druckbeanspruchung in die schräggestellten Wälzkörper einzuleiten und in den Innenring bzw. Außenring weiterzuleiten. Dadurch ist die auf die Lageranordnung ausgeübte Axialkraft dauerhaft und zuverlässig vom Innenring auf den Au-ßenring oder umgekehrt weiterleitbar.

In einer bevorzugten Ausgestaltung der Lageranordnung ist vorgesehen, dass zwischen den Innenringen der Wälzlager und dem Wellenelement zumindest jeweils eine Passfeder vorgesehen ist, zur Sicherung der Innenringe gegen eine Drehung gegenüber dem Wellenelement. Durch die Verwendung von jeweils einer Passfeder zur umfänglichen Sicherung der Innenringe kann auf ein inneres, zwischen den Innenringen einsitzendes Distanzelement verzichtet werden. Somit kann auf ein Bauteil verzichtet werden, dass bei der herkömmlichen Lageranordnung mit einer hochgenauen Fertigungsgüte und hoher Passgenauigkeit hergestellt werden musste.

In einer zudem bevorzugten Ausgestaltung ist die äußere Distanzstruktur als integraler Radialbund des Gehäuseelements ausgebildet. Hierdurch kann auch in diesem Bereich auf ein separates Bauteil verzichtet werden und die Teileanzahl wird geringer und die Montage vereinfacht. In einer weiterhin vorteilhaften Ausgestaltung erstreckt sich die Distanzstruktur unter Bildung eines Radialspaltes zu dem Wellenelement in radialer Richtung und in der Distanzstruktur und dem Wellenelement ist ein in radialer Richtung verlaufender Ölversorgungskanal gebildet. Weiterhin kann in vorteilhafter Weiterbildung vorgesehen sein, dass zwischen den Außenringen der Wälzlager und dem Gehäuseelement zumindest eine Passfeder vorgesehen ist, zur Sicherung der Außenringe gegenüber dem Gehäuseelement gegen eine Relativdrehung der beiden Bauteile.

In einer weiterhin bevorzugten Ausgestaltung ist die Anlageschulter des Distanzelements radial innerhalb eines Außendurchmessers des Hohlwellenelements angeordnet. Dies bedeutet, dass das Hohlwellenelement auf dem Außendurchmesser die Innenringe der Wälzlager trägt und zu der Anlageschulter des Distanzelements eine komplementäre Anlageschulter ausbildet, an der sich das Hohlwellenelement auf einen zweiten, kleineren Außendurchmesser reduziert.

Die Aufgabe wird außerdem gelöst durch ein Verfahren zur Montage einer Lageranordnung nach einem der vorangegangenen Ansprüche zwischen einem Gehäuseelement und einem Wellenelement, bei dem eine vorläufige Montage der mit der Lageranordnung bestückten Welle innerhalb des Gehäuses erfolgt, ein Maß eines Axialspiels zwischen dem Innenring und dem Distanzelement bestimmt wird, nach Demontage der Nutmutter und des Distanzelements eine endgültige Montage mit der Lageranordnung erfolgt, wobei das Distanzelement gegenüber der vorläufigen Montage ein um das bestimmte Maß des Axialspiels angepasstes axiales Breitenmaß aufweist.

In einer bevorzugten Verfahrensausgestaltung wird vor der endgültigen Montage ein zwischen der Nutmutter und dem Hohlwellenelement zu positionierender Absatz des Distanzelements in seinem axialen Breitenmaß um das bestimmte Maß des Axialspiels angepasst.

Die Aufgabe wird zudem gelöst durch einen Antriebsstrang für eine Windkraftanlage, mit einer Hohlwellenbaugruppe zur drehmomentübertragenden Verbindung eines Mehrblattrotors mit einem Generator, wobei die Hohlwellenbaugruppe eine Lageranordnung nach einem der vorangegangenen Ansprüche umfasst. Besonders bevorzugt ist eine Ausgestaltung, bei der ein die Hohlwellenbaugruppe umfassendes Getriebegehäuse vorgesehen ist, das generatorseitig einen Flansch zum Anbinden des Generators umfasst, wobei das Gehäuseelement der Lageranordnung über eine Verschraubung mit dem Getriebegehäuse verbunden ist.

Auch wird die Aufgabe gelöst durch eine Windkraftanlage, umfassend eine Gondel, an der drehbar ein Mehrblattrotor und ein Generator angebracht sind, wobei der Mehrblattrotor drehmomentübertragend über einen Antriebsstrang mit dem Generator verbunden ist und der Antriebsstrang wie zuvor beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: einen Längsschnitt durch eine herkömmliche Lageranordnung,
Fig. 2: einen Längsschnitt durch eine Ausführungsform einer beanspruchten Lageranordnung,
Fig. 3: eine Detaillierung der Lageranordnung gemäß Fig. 2 und
Fig. 4: eine perspektivische Darstellung einer Windkraftanlage.

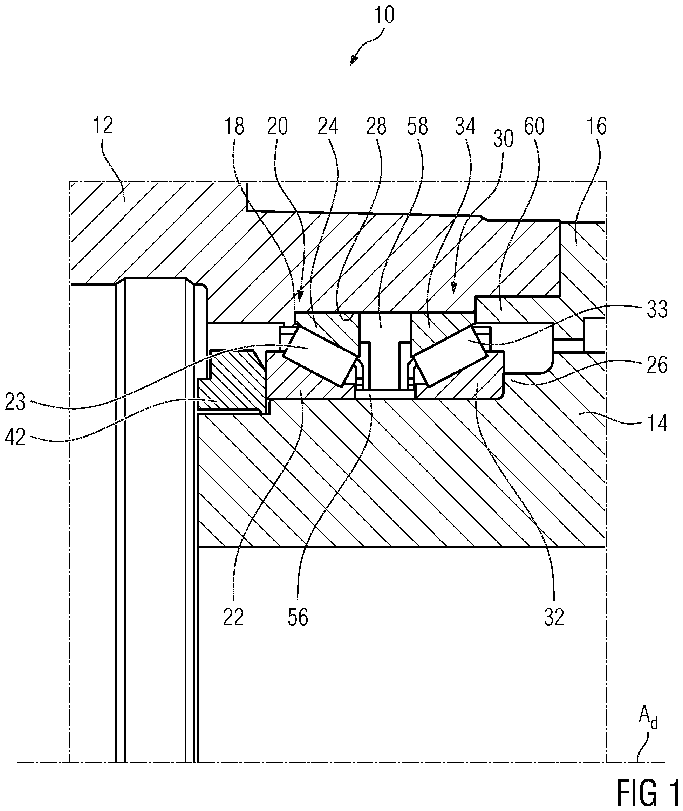

In Figur 1 ist schematisch eine Ausführungsform einer herkömmlichen Lageranordnung 10 in einem montierten Zustand dargestellt. Die Lageranordnung 10 weist ein erstes Wälzlager 20 und ein zweites Wälzlager 30 auf. Die Lageranordnung 10 ist in einem Gehäuseelement 12 angeordnet. Über die Lageranordnung 10 ist ein Wellenelement 14 um eine Drehachse A_{d} drehbar in dem Gehäuseelement 12 gehalten. Das Wellenelement 14 ist vorliegend als Hohlwelle ausgebildet. Der Zusammenbau aus Gehäuseelement 12, Wellenelement 14, Lageranordnung 10 und weiteren Bauteilen kann als Hohlwellenbaugruppe bezeichnet werden. Wie noch im weiteren Verlauf beschrieben wird, kann die Hohlwellenbaugruppe ein Getriebe mit einem Generator antriebsmäßig verbinden.

Das erste Wälzlager 20 umfasst einen Innenring 22, einen Außenring 24 und dazwischen angeordnete Wälzkörper 23. Korrespondierend hierzu umfasst auch das zweite Wälzlager 30 einen Innenring 32, einen Außenring 34 und dazwischen angeordnete Wälzkörper 33. Das erste und zweite Wälzlager 20, 30 sind in O-Anordnung zueinander angeordnet. Beim ersten und zweiten Wälzlager 20, 30 dient der jeweilige Außenring 24, 34 als stationäres Bauteil, da sie im montierten Zustand drehfest im Gehäuseelement 12 gehalten sind. Korrespondierend dazu stellen die Innenringe 22, 32 des ersten und zweiten Wälzlagers 20, 30 jeweils rotierende Bauteile dar. Zwischen den Innenringen 22, 32 der beiden Wälzlager 20, 30 sitzt eine erste Distanzhülse 56 ein und zwischen den Außenringen 24, 34 der beiden Wälzlager 20, 30 sitzt eine zweite Distanzhülse 58 ein. Über die erste Distanzhülse 56 werden die beiden Innenringe 22, 32 axial beabstandet gehalten und über die zweite Distanzhülse 58 werden die beiden Au-ßenringe 24, 34 axial beabstandet gehalten.

Die beiden Innenringe 22, 32 der Wälzlager 20, 30 sitzen mit einer Passung auf dem Wellenelement 14. Zur Sicherung gegen eine Relativdrehung zwischen Innenringe 22, 32 und Wellenelement 14 ist endseitig auf das Wellenelement 14 eine Nutmutter 42 geschraubt, die beide Innenringe 22, 32 und die einsitzende erste Distanzhülse 56 mit einer Axialkraft gegen eine Wellenschulter 26 beaufschlagt. In einem montierten Zustand der Lageranordnung auf das Wellenelement 14 und in dem Gehäuseelement 12 sitzen die beiden Außenringe 24, 34 der Wälzlager 20, 30 ebenfalls mit einer Passung in einer Aufnahmebohrung 28 des Gehäuseelements 12. Über einen Gehäusedeckel 16 wird eine Axialkraft aufgebracht, die die beiden Au-ßenringe 24, 34 und die einsitzende zweite Distanzhülse 58 gegen eine Gehäuseschulter 18 beaufschlagt. Hierdurch ist zunächst eine Sicherung gegen eine Relativdrehung zwischen Au-ßenringen 24, 34 und dem Gehäuseelement 12 gegeben.

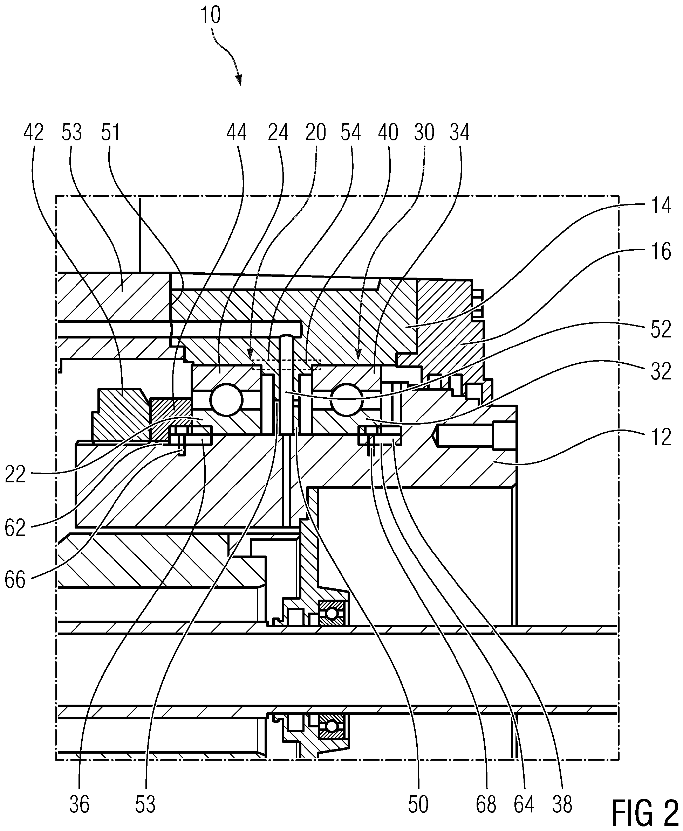

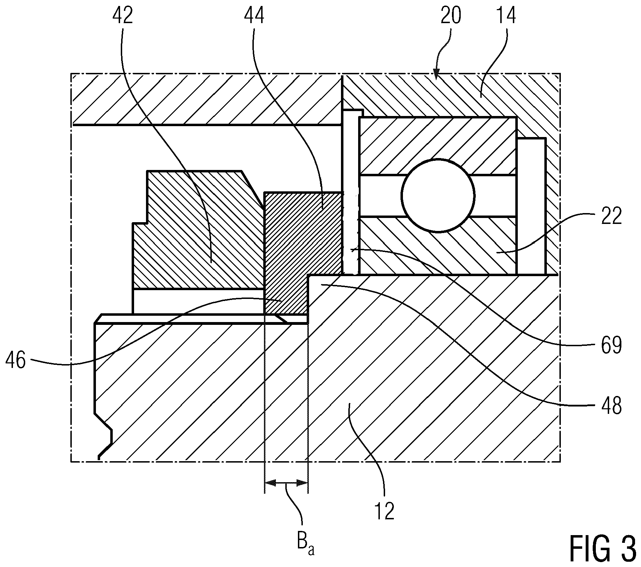

Die Figur 2 zeigt schematisch eine Ausführungsform einer beanspruchten Lageranordnung 10 in einem montierten Zustand. Die Lageranordnung 10 der Figur 2 entspricht in ihrem grundsätzlichen Aufbau der zu der Figur 1 beschriebenen Lageranordnung und wird im Folgenden im Wesentlichen bezüglich ihrer Unterschiede beschrieben. Es ist eine Distanzstruktur 40 vorgesehen, die zwischen den Außenringen 24, 34 der beiden Wälzlager 20, 30 einsitzt. Die Distanzstruktur 40 kann als integraler Radialbund des Gehäuseelements 14 ausgebildet sein. Alternativ kann die Distanzstruktur 40 auch als separate Distanzhülse ausgeführt sein. Auf dem Wellenelement 12 sitzt auch vorliegend eine schraubbare Nutmutter 42. Allerdings sitzt zusätzlich zwischen der Nutmutter 42 und dem Innenring 22 des rotorseitigen Wälzlagers 20 ein Distanzelement 44 ein. Die Nutmutter 42 erzeugt somit mittelbar über das Distanzelement 44 ein Lagerspiel oder eine Lagervorspannung in der Lageranordnung 10, je nach axialer Position der Nutmutter 42 auf dem Wellenelement 12. Die Nutmutter 42 kann in geeigneter Weise bzw. mit geeigneten Mitteln gegenüber dem Wellenelement 12 gegen Drehung gesichert sein. Das Distanzelement 44 und das Wellenelement 12 bilden jeweils gegensätzlich zueinander ausgebildete Anlageschultern 46, 48 aus, siehe hierzu Figur 3. Über die gegensätzlichen Anlageschultern 46, 48 sind das Wellenelement 12 und das Distanzelement 44 in einer axialen Position zueinander formschlüssig festlegt.

Zwischen den Innenringen 22, 32 der Wälzlager 20, 30 und dem Wellenelement 12 ist jeweils eine Passfeder 36, 38 vorgesehen, zur Sicherung der Innenringe 22, 32 gegen eine Drehung gegenüber dem Wellenelement 12. Zur Aufnahme der jeweiligen Passfeder 36, 38 sind in dem Wellenelement 12 Aufnahmenuten 62, 64 vorgesehen. Zusätzlich können die Passfedern 36, 38 aus radialer Richtung gegenüber dem Wellenelement 12 über jeweils ein Verschraubung 66, 68 gesichert sein.

Die Distanzstruktur 40 erstreckt sich unter Bildung eines Radialspaltes 50 zu dem Wellenelement 12 in radialer Richtung, siehe hierzu Figur 3. Zudem kann in der Distanzstruktur 40 und dem Wellenelement 12 ein in radialer Richtung verlaufender Ölversorgungskanal 52 gebildet sein, um beispielsweise eine Beölung von radial innerhalb des Wellenelements 12 befindlichen Komponenten zu gewährleisten. Der Ölversorgungskanal 52 kann zudem mehrere, beispielsweise zu jeder Seite jeweils eine, in axialer Richtung austretende Ölbohrungen 53 aufweisen, zur Beölung des ersten und zweiten Wälzlagers 20, 30.

Zwischen den Außenringen 22, 32 der Wälzlager 20, 30 und dem Gehäuseelement ist eine Passfeder 54 vorgesehen, zur Sicherung der Außenringe 22, 32 gegenüber dem Gehäuseelement. Das Gehäuseelement 14 hat vorliegend über eine Trennfuge 51 eine Trennung erfahren von einem Flansch 53.

Die Einstellung des Lagerspiels der Lageranordnung 10 wird unter zusätzlichen Verweis auf die Figur 3 erläutert, die einen Ausschnitt der in Figur 2 dargestellten Lageranordnung 10 zeigt. Die Figur 3 zeigt die Situation, nachdem das Wellenelement 12 und das Gehäuseelement 14 über die Lageranordnung 10 vorläufig montiert wurde. Zu erkennen ist, dass sich in dieser vorläufigen Montagesituation ein Axialspalt 69 zwischen dem Distanzelement 44 und dem Innenring 22 des Wälzlagers 20 befindet. Der Axialspalt 69 kann als ein Axialspiel verstanden werden, das theoretisch während eines Betriebes der Lageranordnung 10 bestehen würde. Dieser Axialspalt 69 bzw. Axialspiel kann mit geeigneten Messmittel, die vorliegend nicht dargestellt sind, gemessen werden. Der Axialspalt 69 bzw. Axialspiel ist, bei im Übrigen festliegender axialer Position des Innenrings 22 gegenüber dem Wellenelement 12, abhängig von dem mit Bₐ bezeichneten Breitenmaß der Anlageschulter 46 des Distanzelements 44.

Im Anschluss hieran erfolgt eine Demontage der Nutmutter 42 und des Distanzelements 44. Das Distanzelement 44 wird hiernach entweder in seinem Breitenmaß Bₐ bearbeitet oder es kommt ein anderes Distanzelement 44 mit einem geänderten Breitenmaß Bₐ zu Anwendung. Dieses geänderte Breitenmaß Bₐ ist verglichen mit dem ursprünglichen Breitenmaß Bₐ der vorläufigen Montage angepasst worden und zwar um einen aus dem Axialspalt 69 ermittelten Einstellwert, zuzüglich oder abzüglich der gewünschten Vorspannung oder des gewünschten Spiels. Schließlich erfolgt eine endgültige Montage mit passend eingestelltem Lagerspiel der Lageranordnung 10. Bei dem beschriebenen Verfahren verbleibt die Lageranordnung 10 zusammengebaut in dem Gehäuseelement 14, sodass einerseits der Montageaufwand reduziert werden kann und andererseits die Gefahr der Vorschädigung der Bauteile reduziert wird. Außerdem wird der zusätzliche Abkühlvorgang nach der finalen Montage eingespart.

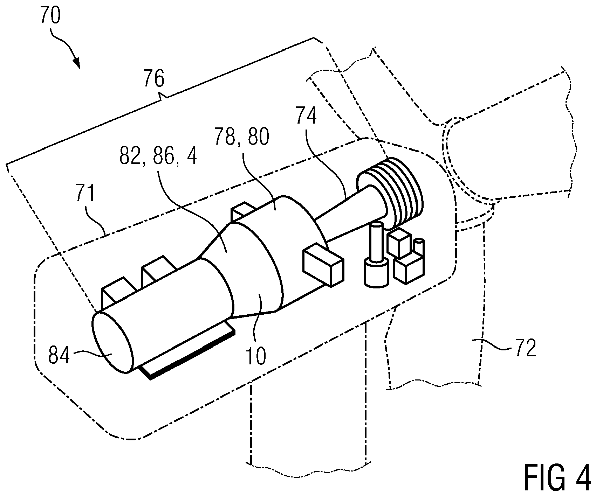

In der Figur 4 ist eine Ausführungsform einer Windkraftanlage 70 dargestellt. Die Windkraftanlage 70 umfasst eine Gondel 71, an der drehbar ein Mehrblattrotor 72 angebracht ist. Der Mehrblattrotor 72 ist mit einer Hauptwelle 74 drehmomentübertragend verbunden, wobei die Hauptwelle 74 zu einem Antriebsstrang 76 gehört. Der Antriebsstrang 76 umfasst ferner ein Getriebe 78, das drehmomentübertragend mit der Hauptwelle 74 verbunden ist. Das Getriebe 78 weist zumindest eine Planetenstufe 80 auf und ist wiederum über eine Hohlwellenbaugruppe 82 mit einem Generator 84 gekoppelt. Die Hohlwellenbaugruppe 82 ist in einen sich verjüngenden Gehäuseabschnitt 86 des Getriebes 78 aufgenommen. Der Gehäuseabschnitt 86 kann als eigenständiges Gehäuse 2 gestaltet sein. In der Hohlwellenbaugruppe 82 ist eine Lageranordnung 10 vorgesehen ist. Die Lageranordnung 10 ist gemäß einer der oben beschriebenen Ausführungsformen ausgebildet.

### Bezugszeichenliste

- 10: Lageranordnung
- 12: Wellenelement
- 14: Gehäuseelement
- 16: Gehäusedeckel
- 18: Gehäuseschulter
- 20: Wälzlager
- 22: Innenring
- 23: Wälzkörper
- 24: Außenring
- 26: Wellenschulter
- 28: Aufnahmebohrung
- 30: Wälzlager
- 32: Innenring
- 33: Wälzkörper
- 34: Außenring
- 36: Passfeder
- 38: Passfeder
- 40: Distanzstruktur
- 42: Nutmutter
- 44: Distanzelement
- 46: Anlageschulter
- 48: Anlageschulter
- 50: Radialspalt
- 51: Trennfuge
- 52: Ölversorgungskanal
- 53: Ölbohrung
- 53: Flansch
- 54: Passfeder
- 56: Distanzhülse
- 58: Distanzhülse
- 62: Aufnahmenut
- 64: Aufnahmenut
- 66: Verschraubung
- 68: Verschraubung
- 69: Axialspalt
- 70: Windkraftanlage
- 71: Gondel
- 72: Mehrblattrotor
- 74: Hauptwelle
- 76: Antriebsstrang
- 78: Getriebe
- 80: Planetenstufe
- 82: Hohlwellenbaugruppe
- 84: Generator
- 86: Gehäuseabschnitt

## Patentansprüche

1. Lageranordnung (10), umfassend
ein Wellenelement (12), ein Gehäuseelement (14),
ein erstes Wälzlager (20) mit einem Innenring (22) und einem Außenring (24),
ein zweites Wälzlager (30) mit einem Innenring (32) und einem Außenring (34), wobei die beiden Wälzlager (20, 30) eine angestellte Lagerung bildend zueinander angeordnet sind und das Wellenelement (12) gegenüber dem Gehäuseelement (14) drehbar um eine Drehachse A_{D} lagern,
eine zwischen den Außenringen (24, 34) der Wälzlager (20, 30) einsitzende Distanzstruktur (40) und
eine auf dem Wellenelement (12) und mittelbar gegen den Innenring (22, 32) eines der beiden Wälzlager (20, 30) zur Erzeugung eines Lagerspiels und/oder einer Lagervorspannung schraubbare Nutmutter (42),
**dadurch gekennzeichnet, dass**
zwischen der Nutmutter (42) und dem Innenring (22, 32) ein Distanzelement (44) vorgesehen ist, wobei das Wellenelement (12) und das Distanzelement (44) jeweils gegensätzlich zueinander ausgebildete Anlageschultern (46, 48) ausbilden und die Nutmutter (42) das Distanzelement (44) in einer axialen Position gegenüber dem Wellenelement (12) festlegt.

2. Lageranordnung (10) nach Anspruch 1, **dadurch gekennzeichnet, dass** zwischen den Innenringen (22, 32) der Wälzlager (20, 30) und dem Wellenelement (12) zumindest jeweils eine Passfeder (36, 38) vorgesehen ist, zur Sicherung der Innenringe (22, 32) gegen eine Drehung gegenüber dem Wellenelement (12).

3. Lageranordnung (10) nach Anspruch 1 oder 2, **dadurch gekennzeichnet, dass** die Distanzstruktur (40) als integraler Radialbund des Gehäuseelements (14) ausgebildet ist.

4. Lageranordnung (10) nach einem der Ansprüche 1 bis 3, **dadurch gekennzeichnet, dass** sich die Distanzstruktur (40) unter Bildung eines Radialspaltes (50) zu dem Wellenelement (12) in radialer Richtung erstreckt und in der Distanzstruktur (40) und dem Wellenelement (12) ein in radialer Richtung verlaufender Ölversorgungskanal (52) gebildet ist.

5. Lageranordnung (10) nach Anspruch 4, **dadurch gekennzeichnet, dass** der Ölversorgungskanal (52) mehrere in axialer Richtung austretende Ölbohrungen (53) aufweist, zur Beölung des ersten und zweiten Wälzlagers (20, 30).

6. Lageranordnung (10) nach einem der Ansprüche 1 bis 5, **dadurch gekennzeichnet, dass** zwischen den Außenringen (22, 32) der Wälzlager (20, 30) und der Distanzstruktur (40) zumindest eine Passfeder (54) vorgesehen ist, zur Sicherung der Außenringe (22, 32) gegenüber der Distanzstruktur (40).

7. Lageranordnung (10) nach einem der Ansprüche 1 bis 6, **dadurch gekennzeichnet, dass** die Anlageschulter (46) des Distanzelements (44) radial innerhalb eines Außendurchmessers des Wellenelements (12) angeordnet ist.

8. Verfahren zur Montage einer Lageranordnung (10) nach einem der vorangegangenen Ansprüche zwischen einem Gehäuseelement (14) und einem Wellenelement (12), bei dem
eine vorläufige Montage der mit der Lageranordnung (10) bestückten Wellenelement (12) innerhalb des Gehäuseelements (14) erfolgt,
ein Maß eines Axialspiels zwischen dem Innenring (22, 32) und dem Distanzelement (44) bestimmt wird,
nach Demontage der Nutmutter (42) und des Distanzelements (44) eine endgültige Montage mit der Lageranordnung (10) erfolgt, wobei das Distanzelement (44) gegenüber der vorläufigen Montage in seinem axialen Breitenmaß angepasst wird.

9. Verfahren nach Anspruch 8, bei dem vor der endgültigen Montage ein zwischen der Nutmutter (42) und dem Wellenelement (12) zu positionierender Absatz des Distanzelements (44) in seinem axialen Breitenmaß um das bestimmte Maß des Axialspiels angepasst wird.

10. Antriebsstrang (76) für eine Windkraftanlage, mit einer Hohlwellenbaugruppe (82) zur drehmomentübertragenden Verbindung eines Mehrblattrotors (72) mit einem Generator (84), wobei die Hohlwellenbaugruppe (82) eine Lageranordnung (10) nach einem der Ansprüche 1 bis 7 umfasst.

11. Antriebsstrang nach Anspruch 10, **dadurch gekennzeichnet, dass** ein die Hohlwellenbaugruppe umfassendes Getriebegehäuse vorgesehen ist, das generatorseitig einen Flansch zum Anbinden des Generators umfasst, wobei das Gehäuseelement der Lageranordnung über eine Verschraubung mit dem Getriebegehäuse verbunden ist.

12. Windkraftanlage (70), umfassend eine Gondel (71), an der drehbar ein Mehrblattrotor (72) und ein Generator (84) angebracht sind, wobei der Mehrblattrotor (72) drehmomentübertragend über einen Antriebsstrang (76) mit dem Generator (84) verbunden ist und der Antriebsstrang (76) nach Anspruch 10 oder 11 ausgebildet ist.
